# EUROPÄISCHE PATENTSCHRIFT

(11) **EP 0 634 451 B1**
(45) Veröffentlichungstag und Bekanntmachung des Hinweises auf die Patenterteilung: **18.09.2002**
(21) Anmeldenummer: 94110733.6
(22) Anmeldetag: 11.07.1994
(51) Int. Cl.: C08K 7/04

(54) **Kunststoff-Formmasse zur Herstellung von Formteilen mit Dekoreffekt**
Resinous moulding matter for manufacture of mouldings having decorative effect
Matière de moulage résineuse pour la production de pièces moulées à l'effet décoratif

(30) Priorität: 17.07.1993 DE 4324030
(43) Veröffentlichungstag der Anmeldung: 18.01.1995
(73) Patentinhaber: Basell Polypropylen GmbH, 55116 Mainz (DE)
(72) Erfinder: Rohrmann, Jürgen, Dr., D-65779 Kelkheim (DE)

(56) Entgegenhaltungen:
- EP-A- 0 246 104
- DE-A- 2 718 024
- DATABASE WPI Section Ch, Week 8218 Derwent Publications Ltd., London, GB; Class A94, AN 82-36081E XP002014630 & JP-A-57 051 155 (SHIRAISHI CHUO) , 25.März 1982

## Beschreibung

Die Erfindung bezieht sich auf eine thermoplastische Kunststoff-Formmasse zur Herstellung von Formteilen mit einem speziellen dekorativen Oberflächeneffekt. Die Formmasse kann mittels der üblichen Verarbeitungsverfahren wie Spritzgießen, Extrudieren und Extrusionsblasformen verarbeitet werden.

Sowohl Kfz-Innenverkleidungsteile, wie Abdeckungen von A-, B-, C-Säulen und dergleichen, als auch Gehäuse von Haushaltskleingeräten werden derzeit in der Regel im Spritzgießverfahren aus thermoplastischen Kunststoffen hergestellt.

Die thermoplastischen Werkstoffe sind in der Masse eingefärbt und die Fertigteile wegen des Aussehens (Design) und des Griffgefühls (Haptik) in sehr vielen Fällen mit einer Oberflächenstruktur (Narbung) versehen. Diese Narbung wird während des Spritzgießprozesses durch das Abformen entsprechender Gravuren erzeugt, welche in die Oberflächen der Kavität des Spritzgießwerkzeugs eingearbeitet sind. Das Resultat sind Formteile mit strukturierter, farblich aber homogener Oberflächenbeschaffenheit.

In der Masse eingefärbte Formteile mit Oberflächennarbungen stellen für viele Anwendungen eine ausreichende Lösung hinsichtlich Design- und Qualitätsanforderungen dar. Es besteht jedoch beispielsweise für die Innenräume von Kraftfahrzeugen der Mittel- und der Oberklasse ein Bedarf an Formteilen, die hinsichtlich Optik und Komfort höheren Ansprüchen genügen können.

Zur Erzeugung anspruchsvollerer Oberflächen bei Formteilen für den Kfz-Innenraum kann man die Verkleidungsteile entweder lackieren (beispielsweise Softlackierung) oder mit Folien oder Textilmaterialien kaschieren. Die Kaschierung erfolgt jeweils mit Hilfe von Klebstoffen. Je nach Art des Trägerwerkstoffes ist zur Erzielung einer guten Haftfestigkeit noch eine Vorbehandlung der Formteile durch Abflammen, Corona-Entladung oder ähnliches erforderlich. Diese einzelnen Verfahrensschritte bedeuten einen relativ hohen Fertigungsaufwand. Ein weiterer, damit verbundener Nachteil liegt in dem ungünstigen Fogging-Verhalten.

Unter Fogging versteht man die Kondensation von flüchtigen Bestandteilen aus der Kfz-Innenausstattung an den Glasscheiben, insbesondere an der Windschutzscheibe. Die Fogging-Intensität ist naturgemäß abhängig von mehreren Faktoren und von den herrschenden Temperaturbedingungen. Da Klebstoffe häufig relativ hohe Anteile an flüchtigen Substanzen enthalten, stellen klebkaschierte Teile praktisch immer ein deutlich foggingförderndes Potential dar.

Ein weiterer Nachteil kann bei klebkaschierten Teilen hinsichtlich der Gestaltungsfreiheit auftreten. Aufgrund der teilweise nur begrenzten Verformbarkeit der Textilien bzw. Folien während des Kaschiervorganges sind gegebenenfalls Einschränkungen hinsichtlich der geometrischen Ausführung der Trägerteile zu berücksichtigen.

Es ist grundsätzlich möglich, eingefärbte thermoplastische Kunststoffe, gegebenenfalls zusätzlich mit Verstärkungsstoffen wie Glasfasern oder Talkum und/oder Elastomeren modifiziert, mit andersfarbigen Fasern zu versehen. Es ist bekannt, daß thermisch und mechanisch gut beständige Fasern aus z. B. thermoplastischem Polyester, Polyamid oder Polyacrylnitril in einer Menge von ca. 0,5 bis 3 % zum Polypropylen zugemischt und mit dem Polymeren auf Extrudern homogen vermischt werden können. Daraus hergestellte und mit einer genarbten Oberfläche versehene Testplatten zeigten den gewünschten, an Textilien erinnernden Oberflächeneffekt. Versuche zur Herstellung von großflächigen Formteilen, bei denen geometrisch bedingt lange Fließwege vorhanden sind, waren jedoch unbefriedigend verlaufen. Der Grund war eine nicht ausreichende thermische und mechanische Widerstandskraft der Polyester-, Polyamid- oder Polyacrylnitril-Fasern. Die beim Spritzgießen von beispielsweise Polypropylen oder Polyester erforderliche Verarbeitungstemperatur von ca. 230 bis 280°C und die bei Schneckenspritzgießmaschinen während des Homogenisierens und beim Durchströmen von Heißkanälen und dünnen Anschnitten auftretende Materialscherung führten zu einer starken thermischen Schädigung der Fasern. Weiterhin kam es wegen dieser Scherkräfte, in Verbindung mit der hohen Temperatur, teilweise sogar zu einer Auflösung der Faser-Geometrie, wodurch der Eindruck einer textilähnlichen Oberfläche völlig verloren ging.

Wegen der Probleme bei der Verwendung der Polyester-, Polyamid- und Polyacrylnitril-Fasern wurde vorgeschlagen, Kohlenstoff-Fasern zu verwenden (vgl. DE 42 21 208, EP-A 0 576 971, DE-U 92 13 922 und EP 499 723). Dabei wurde gefunden, daß bei Verwendung von Kohlenstoff-Fasern keine mechanischen oder thermischen Probleme auftreten und der gewünschte dekorative Effekt der Formteiloberfläche erreicht werden kann. Nachteil der Kohlenstoff-Faser ist ihr sehr hoher Preis. Der Einsatz bei billigen Standardpolymeren ist somit ungünstig.

Die Verwendung von Kohlenstoff-Fasern zur Verstärkung von Polymeren ist an sich bekannt. Üblicherweise werden Mengen von 10 bis 20 % als geschnittene Kohlenstoff-Fasern zu Polymeren zugegeben, um eine markante Erhöhung der mechanischen Eigenschaften (Biegefestigkeit usw.) zu erreichen.

Es bestand daher die Aufgabe, preiswerte thermoplastische Werkstoffe zu entwickeln, die mit den üblichen Kunststoff-Formgebungsverfahren verarbeitet werden können. Insbesondere sollen die Oberflächen der Fertigteile einen speziellen dekorativen Oberflächeneffekt aufweisen (gesprenkelte Oberflächen, Melange-Effekt, Textil-Effekt).

Es wurde nun gefunden, daß die Aufgabe durch Verwendung von dunklen Mineralfasern, insbesondere Basaltfasern, gelöst werden kann.

Die Erfindung betrifft somit eine Kunststoff-Formmasse zur Herstellung von Formteilen mit Dekoreffekt enthaltend
a) 100 bis 50 Gew.-% isotaktisches Polypropylen oder ein Mischpolymerisat des Propylens mit bis zu 17 Gew.-% Ethylen,
b) 0 bis 50 Gew.-% eines kautschukartigen, mit Polypropylen verträglichen Mischpolymerisats,
c) 0 bis 50 Gew.-% Verstärkungs- und/oder Füllstoff und
d) 0,5 bis 15 Gew.-%, bezogen auf a) + b) + c), dunkelolivfarbene, dunkelgraue bis schwarze Basaltfasern mit einer Faserlänge von 0,2 bis 6 mm und einer Dicke von 10 bis 20 µm und wobei die Basaltfasern mit einem Beschichtungsmittel versehen sind.

Vorzugsweise wird ein Homo- oder Copolymer des Propylens mit einem Schmelzindex MFI 230/2 nach DIN 53 735 von 0,2 bis 25 g/10 min verwendet.

Als kautschukartige Mischpolymerisate eignen sich vor allem amorphe Mischpolymerisate aus 30 bis 70 Gew.-% Ethylen und 70 bis 30 Gew.-% Propylen, Terpolymerisate aus Ethylen, Propylen und bis zu 5 Gew.-% Dienen, vorzugsweise Ethylidennorbornen oder 1,4-Hexadien, Mischpolyerisate aus Ethylen und 10 bis 45 Gew. -% Vinylacetat oder Blockcopolymere aus Styrol und Butadien oder Styrol und Isopren, die an beiden Molekülenden Polystyrolblöcke besitzen.

Als verstärkende Füllstoffe werden vorzugsweise Talkum, Kreide, Glasfasern oder Glaskugeln eingesetzt.

Als dekoratives Material werden dunkelolivfarbene, dunkelgraue bis schwarze Basaltfasern mit einer Länge von 0,2 bis 6 mm, bevorzugt von 1 bis 6 mm eingesetzt. Die Dicke der Faser kann 10 bis 20 µm betragen. Die Zugabemenge beträgt 0,5 bis 15 %, vorzugsweise 3 bis 10 %, bezogen auf die gesamte Formmasse.

Die verwendeten dunkelolivfarbenen dunkelgrauen bis schwarzen Basaltfasern sind kommerziell erhältlich und sehr preiswert.

Die Basaltfasern werden zur besseren Verträglichkeit mit der Polymermatrix, zur Erzielung einer glatteren Oberfläche und zur Erzielung eines höheren Verstärkungseffektes (Erhöhung des BEM und ZEM) mit handelsüblichen Haftvermittlern (organofunktionelle Silane wie z. B. Amino-, Epoxy-, Vinyl-, Methacryl-, Mercapto- oder Halogensilane sowie Chrom- und Titankomplexverbindungen), Primern, Wachsen sowie mit den bei Glasfasern handelsüblichen Schlichten gecoatet.

Die Basaltfasern wirken gleichzeitig als Verstärkungsstoff, so daß bei ihrer Verwendng in verstärkten Polymeren die Menge an Verstärkungsstoff reduziert werden kann.

Die erfindungsgemäße Formmasse kann weiterhin die üblichen, die Verarbeitung erleichternde und physikalische Eigenschaften verbessernde Zuschlagstoffe enthalten. Als solche sind zu nennen Licht- und Wärmestabilisatoren, Antioxidantien, Antistatika, Gleitmittel, sowie Farbpigmente und Flammschutzmittel. Die erste Gruppe ist in der Formmasse im allgemeinen ineiner Menge von 0,01 bis 5 Gew.-%, berechnet auf die Menge Polymer plus Füllstoff, enthalten. Füllstoffe, Farbpigmente und Flammschutzmittel werden in einer Menge entsprechend den Bedürfnissen eingesetzt.

Die Verarbeitungsbedingungen für die erfindungsgemäße Formmasse entsprechen den Bedingungen, die normalerweise bei der Verarbeitung von Polypropylen angewendet werden. Die Verarbeitungstemperaturen- gemessen unmittelbar nach dem Verlassen der Düse - liegen je nach Größe und Kompliziertheit des Formteils im Bereich von 240 bis 280°C. Die Werkzeugtemperatur beträgt im allgemeinen 40 bis 70°C.

Für die Herstellung besonders großflächiger und verarbeitungstechnisch schwieriger Formteile können auch die für solche Artikel besonders hohen Verarbeitungstemperaturen gewählt werden, ohne daß eine Beeinträchtigung von Farbe oder Eigenschaften eintritt.

Man erhält einen optimalen Effekt bei der Verwendung von Polymeren in heller Einfärbung, vorzugsweise Weiß, Grau, Blau oder Braun. Dieser Effekt kann durch eine Oberflächenbehandlung der Formteile noch beeinflußt werden.

Als Verarbeitungsverfahren sind beispielsweise das Spritzgießen, die Extrusion und das Extrusionsblasverfahren geeignet.

Mit der erfindungsgemäßen Formmasse erschließen sich unter Einsatz der üblichen, wirtschaftlich vorteilhaften Verarbeitungsverfahren für Kunststoffe, wie z. B. das Spritzgießen, Anwendungen, die bisher aufwendiger waren. Formteile aus der erfindungsgemäßen Formmasse eignen sich für Anwendungszwecke bei Haushaltskleingeräten, in Kraftfahrzeuginnenräumen, im Bausektor und bei Büro- und Kommunikationsgeräten. Aus der Vielzahl der Anwendungsmöglichkeiten werden im folgenden einige Beispiele aufgezählt:
- Haushalt:: - Toastergehäuse
- Haushaltskaffeemaschinen, Wasserkocher
- Bügeleisen
- Gefrier- und Frischhaltegefäße, Schüsseln etc.
- Bestecke, Griffe, Spülbürsten
- Verkleidungsteile an Waschmaschinen, Kühlschränken
- Gartenmöbel
- Blumenübertöpfe
- Kraftfahrzeug:: - Türinnenverkleidungen
- Säulenverkleidungen, Einstiegleisten
- Motorradkoffer
- Bausektor:: - Elektroinstallationsprogramme (Schalter, Schalter- und Steckdosenblenden)
- Türgriffe
- Büro:: - Büromöbelformteile (Rückenlehnen, Armgriffe, Stuhlbeine, Computergehäuse, Ventilatorengehäuse etc.)
- Büromöbelfurniere
- Aktenkofferschalen

Die besonderen Vorteile der erfindungsgemäßen Formmassen sind:
- der hervorragende Dekoreffekt (Melange- bis Textileffekt ähnlich zu Kohlefasern)
- deutliche ökonomische Vorteile gegenüber Kohlefasern
- die problemlose Verarbeitbarkeit ohne thermische oder mechanische Zersetzung
- der zusätzliche Verstärkungseffekt
- leichte Verfügbarkeit des Fasermaterials.

Die nachfolgenden Beispiele sollen die Erfindung erläutern (Angaben in Gew.-%):

### Beispiel 1

Rezeptur A: Eine Mischung aus 74 % PP-Homopolymerpulver mit einem MFI 230/2 von 14 g/10 min, 22 % Bariumsulfat, 1 % Titandioxid, 0,1 % Bisstearoylethylendiamin, 0,2 % Calciumstearat, 0,25 % Tris-(3,5-di-t-butyl-4-hydroxybenzyl)-isocyanurat und 0,25 % Tris-2,4-di-t-butylphenyl-phosphit wurde mit 2,5 % Basaltfaser (Länge bis 5 mm, Dicke 13 µm) versetzt und unter den für verstärktes Polypropylen üblichen Bedingungen extrudiert.

Spritzplatten aus dieser Formmasse besaßen eine glatte, glänzende Oberfläche mit deutlich ausgeprägtem Dekoreffekt (Melangeeffekt). An der genarbten Rückseite war auch bei starker Narbung der Struktureffekt deutlich zu erkennen.

Schmelzindex MFI 230/2 12,5 g/10 min, Zug-E-Modul (ZEM) 2090 MPa, Streckspannung 31,7 MPa, Bruchspannung 26,5 MPa, Streckdehnung 6,1 %, Bruchdehnung 11,3 %.

### Beispiel 2

Rezeptur B: Eine Mischung aus 74 % PP-Homopolymerpulver mit einem MFI 230/2 von 14 g/10 min, 19 % Bariumsulfat, 1 % Titandioxid, 0,1 % Bisstearoylethylendiamin, 0,2 % Calciumstearat, 0,25 % Tris-(3,5-di-t-butyl-4-hydroxybenzyl)-isocyanurat und 0,25 % Tris-2,4-di-t-butylphenyl-phosphit wurde mit 5 % Basaltfaser (Länge bis 5 mm, Dicke 13 µm) versetzt und unter den für verstärktes Polypropylen üblichen Bedingungen extrudiert.

Spritzplatten aus dieser Formmasse besaßen eine glatte, glänzende Oberfläche mit sehr deutlich ausgeprägtem Dekoreffekt (Melangeeffekt). An der genarbten Rückseite war auch bei starker Narbung der Struktureffekt sehr deutlich zu erkennen.

Schmelzindex MFI 230/2 11,3 g/10 min, ZEM 2160 MPa, Streckspannung 31,4 MPa, Bruchspannung 26,2 MPa, Streckdehnung 5,9 %, Bruchdehnung 12,1 %.

### Beispiel 3

Rezeptur C: Eine Mischung aus 74 % PP-Homopolymerpulver mit einem MFI 230/2 von 14 g/10 min, 14 % Bariumsulfat, 1 % Titandioxid, 0,1 % Bisstearoylethylendiamin, 0,2 % Calciumstearat, 0,25 % Tris-(3,5-di-t-butyl-4-hydroxybenzyl)-isocyanurat und 0,25 % Tris-2,4-di-t-butylphenyl-phosphit wurde mit 10 % Basaltfaser (Länge bis 5 mm, Dicke 13 µm) versetzt und unter den für verstärktes Polypropylen üblichen Bedingungen extrudiert.

Spritzplatten aus dieser Formmasse besaßen eine glatte, glänzende Oberfläche mit sehr deutlich ausgeprägtem Dekoreffekt (Melangeeffekt). An der genarbten Rückseite war auch bei starker Narbung der Struktureffekt sehr deutlich zu erkennen.

Schmelzindex MFI 230/2 10,8 g/10 min, ZEM 2220 MPa, Streckspannung 31,0 MPa, Bruchspannung 26,0 MPa, Streckdehnung 5,7 %, Bruchdehnung 13,4 %.

### Beispiel 4

Rezeptur D: Eine Mischung aus 94 % PP-Homopolymerpulver mit einem MFI 230/2 von 14 g/10 min, 1 % Titandioxid, 0,1 % Bisstearoylethylendiamin, 0,2 % Calciumstearat, 0,25 % Tris-(3,5-di-t-butyl-4-hydroxybenzyl)-isocyanurat und 0,25 % Tris-2,4-di-t-butylphenyl-phosphit wurde mit 5 % Basaltfaser (Länge bis 5 mm, Dicke 13 µm) versetzt und unter den für verstärktes Polypropylen üblichen Bedingungen extrudiert.

Spritzplatten aus dieser Formmasse besaßen eine glatte, glänzende Oberfläche mit sehr deutlich ausgeprägtem Dekoreffekt (Melangeeffekt). An der genarbten Rückseite war auch bei starker Narbung der Struktureffekt sehr deutlich zu erkennen.

Schmelzindex MFI 230/2 11,0 g/10 min, ZEM 1970 MPa, Streckspannung 33,0 MPa, Bruchspannung 28,0 MPa, Streckdehnung 7,2 %, Bruchdehnung 16,5 %.

### Beispiel 5

Rezeptur E: Eine Mischung aus 94 % PP-Homopolymerpulver mit einem MFI 230/2 von 14 g/10 min, 1 % Titandioxid, 0,1 % Bisstearoylethylendiamin, 0,2 % Calciumstearat, 0,25 % Tris-(3,5-di-t-butyl-4-hydroxybenzyl)-isocyanurat und 0,25 % Tris-2,4-di-t-butylphenyl-phosphit wurde mit 5 % Basaltfaser (Länge bis 3 mm, Dicke 13 µm) versetzt und unter den für verstärktes Polypropylen üblichen Bedingungen extrudiert.

Spritzplatten aus dieser Formmasse besaßen eine glatte, glänzende Oberfläche mit sehr deutlich ausgeprägtem Dekoreffekt (Melangeeffekt). An der genarbten Rückseite war auch bei starker Narbung der Struktureffekt sehr deutlich zu erkennen.

Schmelzindex MFI 230/2 11,1 g/10 min, ZEM 1977 MPa, Streckspannung 33,2 MPa, Bruchspannung 27,5 MPa, Streckdehnung 7,1 %, Bruchdehnung 18,5 %.

### Beispiel 6

Rezeptur F: Eine Mischung aus 92 % PP-Homopolymerpulver mit einem MFI 230/2 von 14 g/10 min, 1 % Titandioxid, 0,1 % Bisstearoylethylendiamin, 0,2 % Calciumstearat, 0,25 % Tris-(3,5-di-t-butyl-4-hydroxybenzyl)-isocyanurat und 0,25 % Tris-2,4-di-t-butylphenyl-phosphit wurde mit 5 % Basaltfaser (Länge bis 5 mm, Dicke 13 µm) und 2 % polar modifiziertem niedermolekularen Polypropylen (® Hostamont TP AR 504) versetzt und unter den für verstärktes Polypropylen üblichen Bedingungen extrudiert.

Spritzplatten aus dieser Formmasse besaßen eine glatte, glänzende Oberfläche mit deutlich ausgeprägtem Dekoreffekt (Melangeeffekt). An der genarbten Rückseite war auch bei starker Narbung der Struktureffekt deutlich zu erkennen.

Schmelzindex MFI 230/2 11,5 g/10 min, ZEM 2270 MPa, Streckspannung 36,0 MPa, Bruchspannung 32,5 MPa, Streckdehnung 7,5 %, Bruchdehnung 18,5 %.

### Beispiel 7

Rezeptur G: Eine Mischung aus 93 % PP-Homopolymerpulver mit einem MFI 230/2 von 14 g/10 min, 1 % Titandioxid, 0,1 % Bisstearoylethylendiamin, 0,2 % Calciumstearat, 0,25 % Tris-(3,5-di-t-butyl-4-hydroxybenzyl)-isocyanurat und 0,25 % Tris-2,4-di-t-butylphenyl-phosphit wurde mit 5 % Basaltfaser (Länge bis 5 mm, Dicke 13 µm, zuvor mit einer 25 %igen wässrigen Emulsion des in Beispiel 6 verwendeten polar modifizierten niedermolekularen Polypropylens besprüht und getrocknet, so daß ca. 1 % des Produktes in der Gesamtmenge enthalten sind) versetzt und unter den für verstärktes Polypropylen üblichen Bedingungen extrudiert.

Spritzplatten aus dieser Formmasse besaßen eine glatte, glänzende Oberfläche mit deutlich ausgeprägtem Dekoreffekt (Melangeeffekt). An der genarbten Rückseite war auch bei starker Narbung der Struktureffekt deutlich zu erkennen.

Schmelzindex MFI 230/2 11,5 g/10 min, ZEM 2350 MPa, Streckspannung 37,5 MPa, Bruchspannung 33,5 MPa, Streckdehnung 7,0 %, Bruchdehnung 16,5 %.

### Beispiel 8

Rezeptur H: Eine Mischung aus 93 % PP-Homopolymerpulver mit einem MFI 230/2 von 14 g/10 min, 1 % Titandioxid, 0,1 % Bisstearoylethylendiamin, 0,2 % Calciumstearat, 0,25 % Tris-(3,5-di-t-butyl-4-hydroxybenzyl)-isocyanurat und 0,25 % Tris-2,4-di-t-butylphenyl-phosphit wurde mit 5 % Basaltfaser (Länge bis 5 mm, Dicke 13 µm) und 0,5 % eines mit Maleinsäureanhydrid modifizierten Polypropylens (® Hostaprime HC 5) versetzt und unter den für verstärktes Polypropylen üblichen Bedingungen extrudiert.

Spritzplatten aus dieser Formmasse besaßen eine glatte, glänzende Oberfläche mit deutlich ausgeprägtem Dekoreffekt (Melangeeffekt). An der genarbten Rückseite war auch bei starker Narbung der Struktureffekt deutlich zu erkennen.

Schmelzindex MFI 230/2 11,5 g/10 min, ZEM 2350 MPa, Streckspannung 36,5 MPa, Bruchspannung 32,0 MPa, Streckdehnung 7,0 %, Bruchdehnung 18,0 %.

### Beispiel 9

Durch Spritzgießen wurde ein Toastergehäuse aus der Formmasse der Rezeptur B (Beispiel 2) hergestellt. Das Formteil wurde auf einer Spritzgießmaschine mit 5000 kN Schließkraft gefertigt. Sämtliche Teile der Gehäusewände wurden als ein Teil in einer Ebene gespritzt, wobei die seitlichen Flächen mit einer Riffelung versehen waren. Die Stirnflächen des Gehäuses waren dagegen glatt. Durch Falten des Formteils an den drei eingearbeiteten Filmscharnieren um je 90° wurde schließlich das Gehäuse hergestellt. Die Fixierung des gefalteten Gehäuses erfolgte durch Schnapphaken. Die Filmscharniere stellen spritztechnisch deutliche Hindernisse dar. Daher wurde bei einer Massetemperatur von 270°C gearbeitet. Trotz dieser Bedingungen traten keine Struktur- oder Farbänderungen oder störende Oberflächendefekte auf.

### Beispiel 10

Analog Beispiel 9 wurde die Formmasse der Rezeptur D (Beispiel 4) verarbeitet. Es traten keine Struktur- oder Farbänderungen oder störende Oberflächendefekte auf.

### Beispiel 11

Analog Beispiel 9 wurde die Formmasse der Rezeptur F (Beispiel 6) verarbeitet. Es traten keine Struktur- oder Farbänderungen oder störende Oberflächendefekte auf.

## Patentansprüche

1. Kunststoff-Formmasse zur Herstellung von Formteilen mit Dekoreffekt enthaltend
a) 100 bis 50 Gew.-% isotaktisches Polypropylen oder ein Mischpolymerisat des Propylens mit bis zu 17 Gew.-% Ethylen,
b) 0 bis 50 Gew.-% eines kautschukartigen, mit Polypropylen verträglichen Mischpolymerisats,
c) 0 bis 50 Gew.-% Verstärkungs- und/oder Füllstoff und
d) 0,5 bis 15 Gew.-%, bezogen auf a) + b) + c), dunkelolivfarbene, dunkelgraue bis schwarze Basaltfasern mit einer Faserlänge von 0.2 bis 6 mm und einer Dicke von 10 bis 20 µm und wobei die Basaltfasern mit einem Beschichtungsmittel versehen sind.

2. Formmasse nach Anspruch 1, **dadurch gekennzeichnet, daß** die Verstärkungs- und/oder Füllstoffe Talkum, Bariumsulfat, Kreide, Wollastonit, Glasfasern oder Glaskugeln sind.

## Claims

1. A plastic molding composition for production of moldings having a decorative effect, comprising
a) 100 to 50% by weight of isotactic polypropylene or a copolymer of propylene with up to 17% by weight of ethylene,
b) 0 to 50% by weight of a rubber-like copolymer compatible with polypropylene,
c) 0 to 50% by weight of reinforcing substance and/or filler and
d) 0.5 to 15% by weight, based on a) + b) + c), of dark olive-colored or dark gray to black basalt fibers having a fiber length of 0.2 to 6 mm and a thickness of 10 to 20 µm and wherein the basalt fibers are provided with a coating agent.

2. A molding composition as claimed in claim 1, wherein the reinforcing substances and/or fillers are talc, barium sulfate, chalk, wollastonite, glass fibers or glass beads.

## Revendications

1. Matière de moulage résineuse pour la préparation de pièces moulées à effet décoratif contenant
a) un polypropylène isotactique ou un copolymère du propylène contenant jusqu'à 17% en poids d'éthylène, à raison de 100% à 50% en poids,
b) un copolymère caoutchouteux qui est compatible avec le polypropylène, à raison de 0 à 50% en poids,
c) un agent de renforcement et/ou une matière de charge, à raison de 0 à 50% en poids, et
d) des fibres de basalte de couleur olive foncé, gris foncé ou noir présentant une longueur de fibre comprise entre 0,2 mm et 6 mm et une épaisseur comprise entre 10 µm et 20 µm, à raison de 0,5% à 15% en poids, les fibres de basalte étant dotées d'un agent de revêtement.

2. Matière de moulage selon la revendication 1, **caractérisée en ce que** les agents de renforcement et/ou les matières de charge sont la poudre de talc, le sulfate de baryum, la craie, la wollastonite, les fibres de verre ou les billes de verre.
